(19) Europäisches Patentamt
European Patent Office
Office européen des brevets

(11) EP 4 711 388 A1

(12) **EUROPEAN PATENT APPLICATION**
published in accordance with Art. 153(4) EPC

(43) Date of publication:
**18.03.2026 Bulletin 2026/12**

(21) Application number: **24822822.3**

(22) Date of filing: **14.06.2024**

(51) International Patent Classification (IPC):
***C08F 10/00*** *(2006.01)* ***C08F 10/06*** *(2006.01)*
***C08F 4/649*** *(2006.01)*

(52) Cooperative Patent Classification (CPC):
**C08F 4/649; C08F 10/00; C08F 10/06**

(86) International application number:
**PCT/CN2024/099347**

(87) International publication number:
**WO 2024/255875 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023 CN 202310721613**
**16.06.2023 CN 202310722783**

(71) Applicants:
- **China Petroleum & Chemical Corporation**
  **Beijing 100728 (CN)**
- **Sinopec (Beijing) Research Institute of Chemical Industry Co., Ltd.**
  **Beijing 100013 (CN)**

(72) Inventors:
- **ZHAO, Jin**
  **Beijing 100013 (CN)**
- **ZHOU, Junling**
  **Beijing 100013 (CN)**
- **TAN, Yang**
  **Beijing 100013 (CN)**
- **CHEN, Long**
  **Beijing 100013 (CN)**
- **XIA, Xianzhi**
  **Beijing 100013 (CN)**
- **YANG, Rui**
  **Beijing 100013 (CN)**
- **REN, Chunhong**
  **Beijing 100013 (CN)**
- **MA, Changyou**
  **Beijing 100013 (CN)**
- **GAO, Futang**
  **Beijing 100013 (CN)**
- **LI, Weili**
  **Beijing 100013 (CN)**
- **LING, Yongtai**
  **Beijing 100013 (CN)**
- **LIU, Yuexiang**
  **Beijing 100013 (CN)**

(74) Representative: **Hoffmann Eitle**
**Patent- und Rechtsanwälte PartmbB**
**Arabellastraße 30**
**81925 München (DE)**

# (54) CATALYST COMPONENT FOR OLEFIN POLYMERIZATION, PREPARATION METHOD THEREFOR AND USE THEREOF

(57) The present invention relates to an olefin polymerization catalyst. Disclosed are a catalyst component for olefin polymerization, a preparation method therefor and a use thereof. The catalyst component of the present invention comprises a magnesium element, a titanium element, a halogen and an electron donor, wherein the electron donor comprises furan compounds and diether compounds. The molecular weight distribution of a low melt index polymer prepared when the catalyst component is used for olefin polymerization is broader than that of a high melt index polymer.

EP 4 711 388 A1

## Description

### CROSS-REFERENCE TO RELATED APPLICATIONS

The application claims the benefits of the China patent application No. "202310721613.3" and the China patent application No. "202310722783.3", filed on June 16, 2023, the contents of which are specifically and entirely incorporated herein by reference.

### TECHNICAL FIELD

The present invention belongs to the field of olefin polymerization catalysts, in particular to a catalyst component for olefin polymerization, a preparation method therefor and a use thereof.

### BACKGROUND ART

It is well known that Z-N catalysts have been continuously developed and emerged as the key catalysts for industrial olefin polymerization reaction since their appearance.

As an internal electron donor driving the development of said Z-N catalysts, it has developed from monobasic acid ester compounds of the third generation Z-N catalyst (e.g., ethyl benzoate and ethyl p-ethoxybenzoate) into dibasic acid ester compounds of the fourth generation Z-N catalyst (e.g., bis(iso)butyl phthalate). The phthalate ester compounds (plasticizer) is the most commonly used internal electron donor of the polypropylene catalyst at present, however, it has been discovered in research that the plasticizer causes serious damages to the growth and development as well as reproductive system of the animals, and may also cause similar impacts on human beings. The United States of America (USA), the European Union (EU), and other countries and regions in the world have classified the compounds as the toxic chemicals, their use (especially in toys of infants and the like) is strictly limited. Therefore, it is imperative to develop a high performance catalyst free of phthalate ester compounds.

High-flowability polypropylene is one of the major developments of future polypropylene due to its excellent processability. To obtain an olefin polymer with high melt flow rate, it is generally required to add a large amount of hydrogen during the polymerization process, so that the polymer has a low molecularity. However, the upper limit of the addition amount of hydrogen is restrained by the pressure resistance of said polymerization reactor. The partial pressure of the olefin gas for polymerization has to be reduced in order to add more hydrogen, the productivity will be decreased under the circumstance. Meanwhile, the polymer obtained by using the olefin polymerization catalyst for olefin polymerization in the prior art has the defects, such as a low-flowability polymer has an insufficient processability, and a high-flowability polymer has many precipitates.

### SUMMARY OF THE INVENTION

The present invention aims to provide an olefin polymerization catalyst, when the olefin polymerization catalyst is used in the olefin polymerization, the molecular weight distribution of the prepared polymer may become narrower as the melt index increases, such that the polymer with a low melt index has a desirable processability, and the polymer with a high melt index has a lower precipitate, thus the balance of desirable processability and environmental friendliness can be obtained. Furthermore, the catalyst component of the present invention does not contain phthalate ester compound (plasticizer).

The first aspect the present invention provides a catalyst component for olefin polymerization, the catalyst component comprises a magnesium element, a titanium element, a halogen and an electron donor; wherein the electron donor comprises furan compounds and diether compounds; the furan compounds are at least one selected from the furan compounds represented by formula (I),

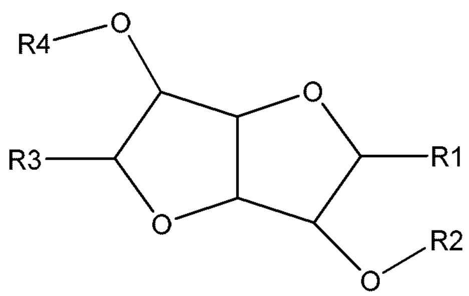

Formula (I)

In formula (I), R1 and R3 are each independently selected from hydrogen, $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl; R2 and R4 are each independently selected from the group consisting of $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ aralkyl or $C_7$-$C_{10}$ alkaryl.

The second aspect the present invention provides a method for preparing a catalyst component for olefin polymerization, the method comprises: mixing a magnesium source, a titanium source and an electron donor, wherein the electron donor comprises furan compounds and diether compounds; the furan compounds are at least one selected from the furan compounds represented by formula (I),

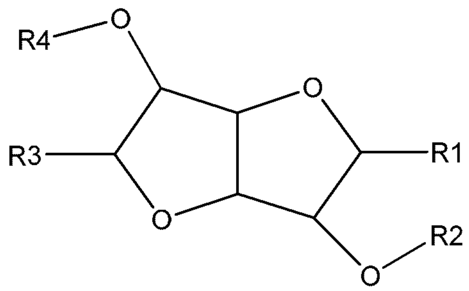

Formula (I)

in formula (I), R1 and R3 are each independently selected from hydrogen, $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl; R2 and R4 are each independently selected from the group consisting of $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ aralkyl or $C_7$-$C_{10}$ alkaryl.

The third aspect of the present invention provides a catalyst system for olefin polymerization, is characterized in that the catalyst system comprises:

(1) the catalyst component according to the first aspect and/or the catalyst component prepared with the method according to the second aspect;
(2) at least one kind of aluminum alkyl; and
(3) an optional other electron donor.

The fourth aspect of the present invention provides an use of the catalyst component according to the first aspect and/or the catalyst component prepared with the method according to the second aspect and/or the catalyst system according to the third aspect in an olefin polymerization.

The fifth aspect of the present invention provides an olefin polymerization method, the olefin polymerization method comprises: carrying out an olefin polymerization reaction in the presence of the catalyst component according to the first aspect and/or the catalyst component prepared with the method according to the second aspect and/or the catalyst system according to the third aspect.

Due to the aforementioned technical scheme, the present invention produces the following favorable effects:

(1) The present invention adopts a catalyst component comprising an electron donor obtained by complexing the furan compounds represented by formula (I) with the diether compounds, the polymer prepared under the low hydrogen polymerization condition has a wider molecular weight distribution, the processability of said polymer can be effectively improved; the molecular weight distribution of said polymer prepared under the high hydrogen polymerization condition becomes narrower along with an increase of the hydrogen gas, such that the content of small molecular fractions in the high melt index polymer can be reduced, which is conducive for reducing the content of precipitates, and the high melt index polymer product itself has a desirable processability. Moreover, the catalyst component has a good balance between hydrogen adjustment sensitivity and stereoscopic directionality when used in the olefin polymerization.
(2) Preferably, the present invention uses a magnesium-containing solid component including a sulfur element as a carrier, and the catalyst component comprising an electron donor obtained by complexing furan compounds with diether compounds has a narrow particle size distribution, the catalyst component has a good balance between hydrogen adjustment sensitivity and stereoscopic directionality when used in the olefin polymerization, and the molecular weight distribution of the prepared polymer may become narrower along with an increase of the melt index, and the polymer has a low content of fine powder.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

Unless otherwise specified in the present invention, an electron donor generally refers to an internal electron donor in the field, and other electron donors generally refer to the external electron donors in the field.

The first aspect of the present invention provides a catalyst component for olefin polymerization, the catalyst component comprises a magnesium element, a titanium element, a halogen and an electron donor; wherein the electron donor comprises furan compounds and diether compounds; the furan compounds are at least one selected from the furan compounds represented by formula (I),

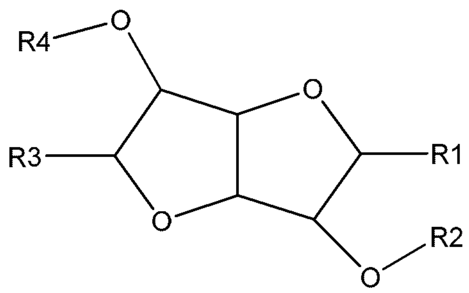

Formula (I)

In formula (I), R1 and R3 are each independently selected from hydrogen, $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl; R2 and R4 are each independently selected from the group consisting of $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ aralkyl or $C_7$-$C_{10}$ alkaryl.

According to the invention, R1 and R3 in formula (I) may be each independently hydrogen, methyl, ethyl, propyl, butyl, pentyl, hexyl, heptyl, octyl, nonyl, decyl; preferably, R1 and R3 in formula (I) are each independently selected from hydrogen, $C_1$-$C_6$ straight chain alkyl, and $C_3$-$C_6$ branched chain alkyl.

According to the invention, R2 and R4 in formula (I) may be each independently methyl, ethyl, propyl, butyl, pentyl, hexyl, heptyl, octyl, nonyl, decyl; preferably, R2 and R4 in formula (I) are each independently selected from $C_1$-$C_6$ straight chain alkyl and $C_3$-$C_6$ branched chain alkyl, more preferably selected from $C_1$-$C_3$ straight chain alkyl.

The present inventors have surprisingly discovered when diether compounds are complexed with furan compounds represented by formula (I) of the present application as an electron donor, a synergistic effect can be obtained. When the catalyst component is used for the olefin polymerization, the molecular weight distribution of the prepared polymer becomes narrower along with an increase of the melt index, thus both the good processability and the desirable environmental friendliness can be obtained. In addition, the catalyst component has a good balance between hydrogen adjustment sensitivity and stereoscopic directionality.

According to the present invention, the content of furan compounds is preferably 0.01-2 mole relative to per mole of diether compounds; for example, the content of furan compounds in the catalyst component may be 0.01 mol, 0.05 mol, 0.06 mol, 0.07 mol, 0.08 mol, 0.09 mol, 0.1 mol, 0.15 mol, 0.2 mol, 0.25 mol, 0.3 mol, 0.35 mol, 0.4 mol, 0.45 mol, 0.5 mol, 0.6 mol, 0.7 mol, 0.8 mol, 0.9 mol, 1 mol, 1.1 mol, 1.2 mol, 1.5 mol, 2 mol, and a random value within the range consisting of any two points thereof, relative to per mole of diether compounds. More preferably, content of furan compounds in the catalyst component is 0.03-1.2 mole, further preferably 0.05-0.4 mole relative to per mole of diether compounds. When the molar ratio of the diether compounds to the furan compounds in the catalyst component is within the further preferred range, the synergistic effect of the two electron donors is more pronounced, the hydrogen adjustment sensitivity and the stereoscopic directionality can be further improved, and the molecular weight distribution of the polymer is narrower under the high hydrogen conditions.

According to the present invention, the total content of the furan compounds and the diether compounds in the electron donor is preferably within the range of 70wt% to 100wt%, more preferably within the range of 80wt% to 100wt%, further preferably within the range of 90wt% to 100wt%, based on the total weight of the electron donor.

According to the invention, it is preferable that the furan compounds are at least one selected from the furan compounds represented by formula (1-1),

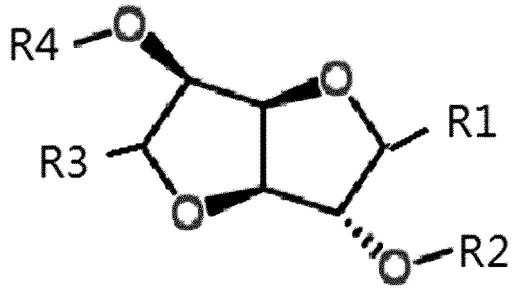

Formula (I-I)

R1, R2, R3, R4 in formula (1-1) are as described in formula (I), the contents are not repeatedly described herein.

According to the invention, preferably, the furan compounds are at least one selected from the group consisting of (3R,3aR,6S,6aR)-3-methoxy-6-propoxy hexahydrofuro [3,2-b] furan, (3R,3aR,6S,6aR)-3-methoxy-6-ethoxy hexahydrofuro [3,2-b] furan, (3R,3aR,6S,6aR)-3,6-dimethoxy hexahydrofuro [3,2-b] furan, (3R,3aR,6S,6aR)-3,6-diethoxy hexahydrofuro [3,2-b] furan, (3R,3aR,6S,6aR)-3,6-dipropoxy hexahydrofuro [3,2-b] furan. More preferably, the furan compound is (3R,3aR,6S,6aR)-3,6-dimethoxy hexahydrofuro [3,2-b] furan.

According to the invention, the diether compounds may be various diether compounds of the electron donor which can be used in the catalyst for olefin polymerization, preferably, the diether compounds are at least one selected from diether compounds represented by formula (II),

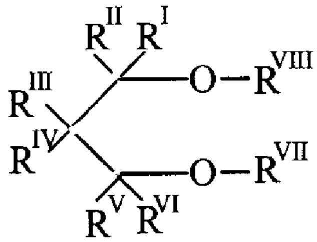

Formula (II)

In formula (II), $R^I$, $R^{II}$, $R^{III}$, $R^{IV}$, $R^V$ and $R^{VI}$ are the same or different, and are each independently selected from hydrogen, halogen atoms, $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl, and the groups $R^I$-$R^{VI}$ can be optionally bonded to form a ring; $R^{VII}$ and $R^{VIII}$ are the same or different, and are independently selected from the group consisting of $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl.

According to the present invention, preferably, $R^1$, $R^{II}$, $R^{111}$, $R^{IV}$, $R^V$ and $R^{VI}$ in formula (II) are each independently selected from hydrogen, $C_1$-$C_{20}$ straight chain alkyl, and $C_3$-$C_{20}$ branched chain alkyl; or $R^{III}$ and $R^{IV}$ are bonded to form a fluorene ring. More preferably, $R^I$, $R^{II}$, $R^{III}$, $R^{IV}$, $R^V$ and $R^{VI}$ in formula (II) are each independently selected from hydrogen, $C_1$-$C_7$ straight chain alkyl, and $C_3$-$C_7$ branched chain alkyl.

According to the invention, when $R^{III}$ and $R^{IV}$ in formula (II) are bonded to form a fluorene ring, the diether compounds preferably have a structure represented by formula (II-1),

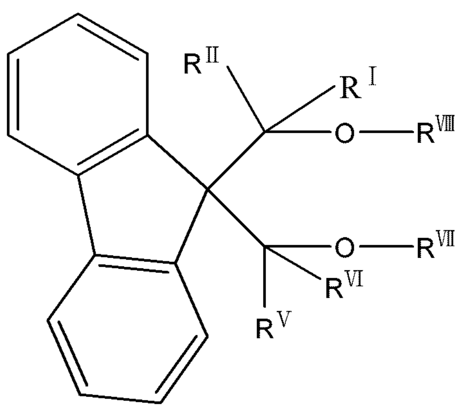

Formula (II-1)

Wherein $R^I$, $R^{II}$, $R^V$, $R^{VI}$, $R^{VII}$ and $R^{VII}$ in formula (II-1) are as shown in formula (II).

According to the invention, preferably, $R^{VII}$ and $R^{VIII}$ in formula (II) are each independently selected from the group consisting of $C_1$-$C_5$ straight chain alkyl and $C_3$-$C_5$ branched chain alkyl.

According to the invention, preferably, the diether compounds are at least one selected from the group consisting of 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-(2-phenylethyl)-1,3-dimethoxypropane, 2-(2-cyclohexylethyl)- 1,3-dimethoxypropane, 2-(p-chlorophenyl)-1,3-dimethoxypropane, 2-(diphenylmethyl)-1,3-dimethoxypropane, 2,2-dicyclohexyl-1,3-dimethoxypropane, 2,2-dicyclopentyl-1,3-dimethoxypropane, 2,2-diethyl-1,3-dimethoxypropane, 2,2-dipropyl-1,3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3-dimethoxypropane, 2-methyl-2-isopropyl-1,3-dimethoxypropane, 2-methyl-2-phenyl-1,3-dimethoxypropane, 2-methyl-2-cyclohexyl-1,3-dimethoxypropane, 2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2-isobutyl-2-isopropyl-1,3-dimethoxypropane, 2-(1-methylbutyl)-2-isopropyl-1,3-dimethoxypropane, 2-isopropyl-2-isopentyl-1,3-dimethoxypropane, 2-phenyl-2-isopropyl-1,3-dimethoxypropane, 2-phenyl-2-sec-butyl-1,3-dimethoxypropane, 2-benzyl-2-isopropyl-1,3-dimethoxypropane, 2-cyclopentyl-2-isopropyl-1,3-dimethoxypropane, 2-cyclopentyl-2-sec-butyl-1,3-dimethoxypropane, 2-cyclohexyl-2-isopropyl-1,3-dimethoxypropane, 2-cyclohexyl-2-sec-butyl-1,3-dimethoxypropane, 2-isopropyl-2-sec-butyl-1,3-dimethoxypropane, 2-cyclohexyl-2-cyclohexylmethyl-1,3-dimethoxypropane and 9,9-bis (methoxymethyl) fluorene. More preferably, the diether compounds are 2-isopropyl-2-isopentyl -1,3-dimethoxypropane and/or 9,9-bis (methoxymethyl) fluorine.

The content of magnesium element in the catalyst component of the present invention may be 2-18 parts by weight, preferably 3-16 parts by weight, relative to each part by weight of titanium element.

The content of electron donor in the catalyst component of the present invention may be 2-17 parts by weight, preferably 3-15 parts by weight, relative to each part by weight of titanium element.

According to the invention, the catalyst component may further comprise a halogen, and the halogen in said catalyst component may be at least one of fluorine element, chlorine element, bromine element and iodine element. The halogen in the catalyst component may be derived from a source of magnesium element and/or a halogen contained in a source of titanium element.

According to the invention, the source of magnesium element may be any magnesium-containing compound capable of preparing a polyolefin catalyst component; preferably, the source of magnesium element is at least one selected from the group consisting of magnesium halide (e.g. magnesium chloride and/or magnesium bromide), magnesium alcoholate (e.g., diethoxy magnesium), magnesium halogenated alcoholate (e.g., ethoxy magnesium chloride), magnesium halide alcoholate adduct, magnesium halide adduct (e.g., the magnesium halide adduct disclosed in the patent applications CN1091748, CN101050245, CN101486722, CN102796132B, CN102796129B and CN102796128B, the relevant contents disclosed by the patent applications are specifically and entirely incorporated herein by reference) and magnesium-containing solid component.

In the invention, the magnesium halide alcoholate adduct may be, for example, at least one of the magnesium halide alcoholate adduct with a structures represented by formula (IV);

$$MgX_2 \cdot m'R_7OH \qquad \text{Formula (IV)}$$

In formula (IV), X is halogen, preferably chlorine or bromine; m' is 1-5; $R_7$ is $C_1$-$C_6$ straight or branched chain alkyl, such as methyl, ethyl, propyl, butyl, pentyl, hexyl.

In the present invention, the magnesium-containing solid component may be, for example, at least one of the magnesium-containing solid component with a structures represented by formula (III);

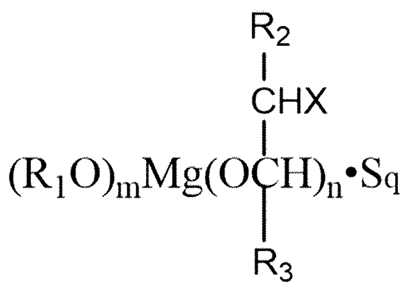

Formula (III)

In formula (III), $R_1$ is $C_1$-$C_6$ straight or branched chain alkyl; $R_2$ and $R_3$ are the same or different, and are each

independently hydrogen or $C_1$-$C_5$ straight or branched chain alkyl, wherein the hydrogen on the alkyl is optionally substituted with a halogen atom; X is halogen, preferably chlorine or bromine; m is 0.1-1.9, n is 0.1-1.9, m + n =2, 0< q≤0.5.

According to the invention, preferably, the magnesium-containing solid component has an average particle diameter of 12-30μm, and a particle size distribution less than 1.2, more preferably a particle size distribution within the range of 0.2-0.8. In the present invention, the average particle diameter and particle size distribution of the olefin polymerization catalyst carrier (i.e., magnesium-containing solid component) can be measured by using the Master Sizer 2000 laser particle analyzer (manufactured by Malvern Instruments Ltd.).

The synthesis raw materials of said magnesium-containing solid component comprise a sulfur source, a magnesium halide represented by general formula $MgX^2Y$, a compound represented by general formula $R_4OH$, and an ethylene oxide compound; in the general formula $MgX^2Y$, $X^2$ is halogen, Y is halogen or $C_1$-$C_6$ alkyl, $C_1$-$C_5$ alkoxy, $C_6$-$C_{10}$ aryl or $C_6$-$C_{10}$ aryloxy; in the general formula $R_4OH$, $R_4$ is $C_1$-$C_8$ alkyl or $C_3$-$C_8$ cycloalkyl; the ethylene oxide compound has a structure represented by formula (V):

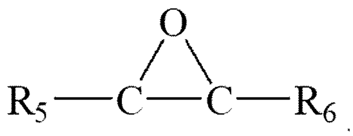

Formula (V)

In formula (V), $R_5$ and $R_6$ are each independently hydrogen, $C_1$-$C_5$ alkyl or $C_1$-$C_5$ halogenated alkyl.

According to the invention, the sulfur source is an anhydrous sulfur or a sulfur containing crystal water, such as sulfur or sulfur bromide, sulfur chloride or sulfur iodide, preferably sulfur and/or sulfur chloride; more preferably α-sulfur and/or β-sulfur.

According to the invention, in the general formula $MgX^2Y$, $X^2$ is preferably chlorine or bromine, Y is preferably chlorine, bromine, $C_1$-$C_5$ alkyl, $C_1$-$C_5$ alkoxy, $C_6$-$C_{10}$ aryl or $C_6$-$C_{10}$ aryloxy; the $C_1$-$C_5$ alkyl may be, for example, methyl, ethyl, n-propyl, isopropyl, n-butyl, sec-butyl, isobutyl, tert-butyl, n-pentyl, isopentyl, tert-pentyl or neopentyl; the $C_1$-$C_5$ alkoxy may be, for example, methoxy, ethoxy, propoxy, isopropoxy, butoxy or isobutoxy; the $C_6$-$C_{10}$ aryl may be, for example, phenyl, o-tolyl, m-tolyl, p-tolyl, o-ethylphenyl, m-ethylphenyl, p-ethylphenyl or naphthyl; and the $C_6$-$C_{10}$ aryloxy may be, for example, phenoxy or naphthoxy.

The magnesium halide represented by the general formula $MgX^2Y$ may be a magnesium halide or a mixture of magnesium halides. Specific examples of magnesium halides represented by the general formula $MgX^2Y$ may be, but are not limited to: one or more of magnesium chloride, magnesium bromide, phenoxy magnesium chloride, isopropoxy magnesium chloride and n-butoxy magnesium chloride. Magnesium chloride is preferred from the viewpoint of availability of raw materials.

According to the invention, in the general formula $R_4OH$, $R_4$ is preferably $C_1$-$C_8$ alkyl; the $C_1$-$C_8$ alkyl may be, for example, methyl, ethyl, n-propyl, isopropyl, n-butyl, sec-butyl, isobutyl, tert-butyl, n-pentyl, isopentyl, tert-pentyl, neopentyl, hexyl, isohexyl, heptyl, isoheptyl, octyl or isooctyl. Specific examples of compounds represented by the general formula $R_4OH$ may be, but are not limited to: one or more of ethanol, propanol, isopropanol, n-butanol, isobutanol, pentanol, isoamyl alcohol, n-hexanol, n-octanol, and 2-ethylhexanol.

According to the invention, in the ethylene oxide compound with a structure represented by formula (V), $R_5$ and $R_6$ are preferably each independently hydrogen, $C_1$-$C_3$ alkyl or $C_1$-$C_3$ halogenated alkyl. Specific examples of the ethylene oxide compound may be, but are not limited to: one or more of ethylene oxide, propylene oxide, butylene oxide, epichlorohydrin, chlorobutane oxide, bromopropylene oxide and bromobutylene oxide.

According to the invention, the water contained in the magnesium-containing solid component originates from trace water carried by the synthesis feedstock and the reaction medium.

The preparation method for the magnesium-containing solid component in the invention comprises the following steps:

(a) Mixing and heating a sulfur source, a magnesium halide represented by general formula $MgX^2Y$, a compound represented by $R_4OH$ and an optional inert liquid medium to obtain a liquid mixture;

(b) Emulsifying the liquid mixture obtained in step (a), and subjecting the emulsified product to the contact and reaction with an ethylene oxide compounds.

In the general formula $MgX^2Y$, $X^2$ is halogen and Y is halogen or $C_1$-$C_6$ alkyl; in the general formula $R_4OH$, $R_4$ is $C_1$-$C_8$ alkyl or $C_3$-$C_8$ cycloalkyl; the ethylene oxide compound has a structure represented by formula (V):

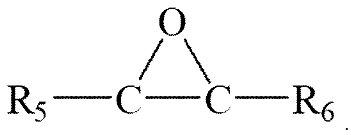

Formula (V)

Wherein the magnesium halide represented by general formula $MgX^2Y$, the compound represented by general formula $R_4OH$, the sulfur source and the ethylene oxide compound are as described in the above text, the relevant contents will not be repeatedly described herein.

According to the invention, based on 1mol of magnesium halide represented by general formula $MgX^2Y$, the sulfur source is used in an amount of 0.0001-0.1mol, the compound represented by general formula $R_4OH$ is used in an amount of 4-30mol, and the ethylene oxide compound with a structure represented by formula (V) is used in an amount of 1-10 mol; preferably, based on 1mol of magnesium halide represented by general formula $MgX^2Y$, the compound represented by general formula $R_4OH$ is used in an amount of 6-20mol, and the ethylene oxide compound with a structure represented by formula (V) is used in an amount of 2-6 mol.

According to the invention, the trace water in the above-mentioned reactants may also participate in the reaction for forming the magnesium-containing solid component.

According to the invention, a surfactant can be added to the liquid mixture of step (a), the surfactant is selected from one of polyvinyl pyrrolidone (PVP), polyethylene glycol (PEG), polyacrylic acid, polyacrylate, polystyrene sulfonate, naphthalene sulfonic acid formaldehyde condensate, condensed alkyl phenyl ether sulfate, condensed alkylphenol polyoxyethylene ether phosphate, oxyalkyl acrylate copolymer modified polyethylenimine, 1-dodecyl-4-vinylpyridine bromide polymer, polyvinyl benzyl trimethylamine salt, polyvinyl alcohol, polyacrylamide, poly(ethylene oxide-propylene oxide) block copolymer, polyvinyl pyrrolidone vinyl acetate copolymer, alkylbenzene polyoxyethylene ether and poly(alkyl methacrylate) compounds or a combination thereof, preferably one of polyvinyl pyrrolidone, polyvinyl pyrrolidone vinyl acetate copolymer and polyethylene glycol or a combination thereof.

According to the invention, the conditions of heating the mixture of a sulfur source, a magnesium halide represented by general formula $MgX^2Y$, a compound represented by $R_4OH$ and an optional inert liquid medium in step (a) are not particularly limited, as long as the heating conditions cause that the magnesium halide represented by general formula $MgX^2Y$ melts and reacts sufficiently with the sulfur source. Generally, the heating conditions may comprise: a temperature of 80-120°C, and a heating time of 0.5-5 h; preferably, a temperature of 80-100°C and a heating time of 0.5-3 h.

According to the invention, the dosage of said inert liquid medium can be chosen according to the dosage of magnesium halide represented by general formula $MgX^2Y$. In general, the inert liquid medium may be used in an amount of 0.8-10L, preferably 2-8L, based on 1mol of magnesium halide represented by general formula $MgX^2Y$. The inert liquid medium may be any one of the various liquid media commonly used in the art that do not chemically interact with the reactants and reaction products. For example, the inert liquid medium may be silicone oil and/or an inert liquid hydrocarbon solvent. Specifically, the inert liquid medium may be one or more of kerosene, paraffin oil, vaseline oil, white oil, methyl silicone oil, ethyl silicone oil, methyl ethyl silicone oil, phenyl silicone oil, and methyl phenyl silicone oil. The inert liquid medium according to the invention is particularly preferably white oil.

According to the invention, the liquid mixture obtained in step (a) may be emulsified by various methods well-known among those skilled in the art. For example, the liquid mixture may be emulsified by subjecting to a low-speed shearing or a high-speed shearing. The stirring rate of the low-speed shearing is usually 400-800 rpm. The high-speed shearing method is well known among those skilled in the art, such as the high-speed stirring method disclosed in CN1151183C (i.e., the solution containing the liquid magnesium halide adduct is stirred at a speed of 2,000-5,000 rpm). In addition, the liquid mixture may be emulsified with the methods disclosed in the following patents: CN1267508C discloses that a solution containing a liquid magnesium halide adduct is subjected to rotary dispersion in a supergravity bed (the rotating speed can be 100-3,000 rpm); CN1463990A discloses that the solution containing the liquid magnesium halide adduct is output by an emulsifying machine at the rotating speed of 1,500-8,000 rpm; US6020279 discloses that a solution containing a liquid magnesium halide adduct is emulsified by a spraying method.

According to the invention, the conditions for subjecting the emulsified product to the contact and reaction with an ethylene oxide compound in step (b) may be various existing conditions capable of forming an olefin polymerization catalyst carrier, for example, the conditions for the contact reaction may comprise a temperature of 50-120°C and a time of 20-60 min; preferably, a temperature of 60-100°C and a time of 20-50 min.

According to the present invention, the step (b) of the method may further comprise subjecting the product obtained by the contact reaction to solid-liquid separation, washing the solid-phase product and drying the washed solid-phase product. The solid-liquid separation may be any one of various conventional methods for separating a solid phase

from a liquid phase, such as suction filtration, pressure filtration, or centrifugal separation, and preferably, the solid-liquid separation is pressure filtration. The conditions for the pressure filtration are not particularly limited in the invention, as long as the separation of the solid phase and the liquid phase is sufficiently achieved. Washing the solid phase product may be carried out by a method well-known among those skilled in the art, for example, washing the obtained solid phase product with an inert hydrocarbon solvent (e.g., pentane, hexane, heptane, petroleum ether, and gasoline). The drying conditions are not particularly limited in the invention, for example, the drying conditions may comprise: a drying temperature of 20-70°C, and a drying time of 0.5-10 h. According to the invention, the drying can be carried out under atmospheric or reduced pressure.

Preferably, the particles of the magnesium-containing solid component obtained in the above process for preparing the magnesium-containing solid component are washed with an inert hydrocarbon solvent (e.g., hexane, heptane, octane, decane, toluene), and then dried for use in the subsequent step to prepare the catalyst component for olefin polymerization.

According to the invention, the source of the titanium element may be any titanium-containing compound capable of producing a polyolefin catalyst component; preferably, the titanium element is derived from the titanium compounds represented by formula $Ti(OR')_{3-a}Z_a$ and/or $Ti(OR')_{4\cdot 3}Z_3$, wherein R' is $C_1$-$C_{20}$ alkyl, preferably $C_1$-$C_{14}$ aliphatic hydrocarbon, preferably $C_1$-$C_8$ alkyl, such as methyl, ethyl, propyl, butyl, pentyl, hexyl, heptyl; Z is F, Cl, Br or I, a is an integer of 1-3, b is an integer of 0-4, preferably an integer of 1-4. More preferably, the titanium element is derived from one or more sources selected from the group consisting of titanium tetrachloride, titanium tetrabromide, titanium tetraiodide, tributoxytitanium chloride, dibutoxytitanium dichloride, butoxytitanium trichloride, triethoxytitanium chloride, diethoxytitanium dichloride, ethoxytitanium trichloride and titanium trichloride.

According to a specific embodiment of the invention, the present invention also provides a catalyst component for olefin polymerization, the catalyst component comprising the reaction product of the following ingredients: a magnesium source, a titanium source, and an electron donor, wherein the electron donor includes furan compounds and diether compounds.

According to a specific embodiment of the present invention, the invention further provides a catalyst component for olefin polymerization, the catalyst component comprising the reaction product of the following ingredients:

(1) a magnesium-containing solid component;
(2) at least one titanium-containing compound (titanium source); and
(3) an electron donor;
wherein the electron donor comprises furan compounds and diether compounds; the magnesium-containing solid component is at least one of the magnesium-containing solid component with a structure represented by formula (III).

The second aspect of the present invention provides a method for preparing a catalyst component for olefin polymerization, the method comprises: mixing a magnesium source, a titanium source and an electron donor, wherein the electron donor comprises furan compounds and diether compounds; the furan compounds are at least one selected from the furan compounds represented by formula (I),

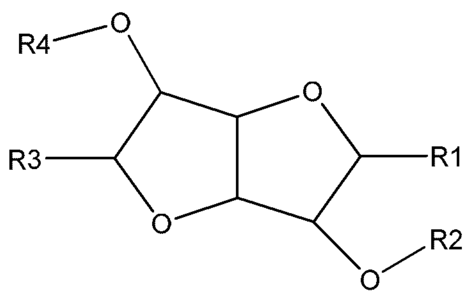

Formula (I)

In formula (I), R1 and R3 are each independently selected from hydrogen, $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl; R2 and R4 are each independently selected from the group consisting of $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ aralkyl or $C_7$-$C_{10}$ alkaryl.

The catalyst component for olefin polymerization of the present invention can be prepared with a conventional method, for example, the mixing method comprises: carrying out the contact reaction on a magnesium source and a titanium source, and adding electron donors in one or more time periods before, during and after the contact reaction of the magnesium source and the titanium source, wherein the ingredients of the electron donors can be added separately or simultaneously, and the electron donors comprise furan compounds and diether compounds. Specifically, the reaction of

the magnesium source with the titanium source may be performed in the same manner as in the prior art, for example, the titanium source may be cooled to 0°C or less (preferably from -5°C to -30°C), the magnesium source is then added, and mixed with stirring at that temperature for 10-60 min, the temperature is subsequently raised to the reaction temperature (i.e., about 60-130°C), and the reaction temperature was kept for 0.5-10 h, preferably 0.5-5 h. The time period before the reaction of the magnesium source with the titanium source refers to the time period after the magnesium source is added to the reactor and before the temperature is raised to the reaction temperature.

According to a particularly preferred embodiment of the present invention, the method for preparing a catalyst component for olefin polymerization comprises: adding a titanium source (e.g., titanium halide) into a reaction vessel, cooling to a temperature range from -30°C to 0°C, adding a magnesium source to the reaction vessel, stirring and mixing the materials at the temperature for 10-60 min; then raising the temperature to 0-130°C (preferably 80-130°C), adding an electron donor during the temperature-rise process, keeping the temperature at 0-130°C (preferably 80-130°C) for 10-900min (preferably 20-240min) and then filtering the liquid. Subsequently, adding a titanium source (e.g., titanium halide), and washing, with a nonpolar solvent (e.g., hexane), and drying to obtain a catalyst component.

In the invention, the types of the furan compounds and the diether compounds used in the method for preparing a catalyst component for olefin polymerization are as described in the first aspect, the content will not be repeatedly described herein.

In the present invention, the types of magnesium source and titanium source used in the method for preparing a catalyst component for olefin polymerization are as described in the source of magnesium element and the source of titanium element of the first aspect, the content will not be repeatedly described herein.

According to the invention, in the method for preparing a catalyst component for olefin polymerization, relative to per mole of diether compounds, the furan compounds may be used in an amount of 0.1-3 mole; for example, relative to per mole of diether compounds, the furan compounds may be 0.1 mol, 0.2 mol, 0.3 mol, 0.4 mol, 0.5 mol, 0.6 mol, 0.7 mol, 0.8 mol, 0.9 mol, 1 mol, 1.1 mol, 1.2 mol, 1.3 mol, 1.4 mol, 1.5 mol, 1.6 mol, 1.7 mol, 1.8 mol, 1.9 mol, 2 mol, 2.1 mol, 2.5 mol, 3 mol, and a random value within the range consisting of any two points thereof. Preferably, the furan compound is used in an amount of 0.1-2 mole, more preferably in an amount of 0.15-1.8 mole, relative to per mole of diether compounds. When the molar dosages of the dimethyl components and the furan compounds in the catalyst component are in the preferable range, the synergistic effect of the two electron donors is more obvious, the hydrogen adjustment sensitivity and stereoscopic directionality can be further improved, and a polymer with higher melt index and narrower molecular weight distribution can be further obtained. The furan composition may also be used in an amount of 0.1-1.5 mole, alternatively 0.15-1.5 mole, alternatively 0.15-1.2 mole, or 0.15-1 mole, alternatively 0.2-1 mole, relative to per mole of diether compounds.

In the method for preparing a catalyst component for olefin polymerization in the invention, the dosage molar ratio of the magnesium source calculated in terms of magnesium element to the titanium source calculated in terms of titanium element may be 1:5, 1:15, 1:20, 1:25, 1:30, 1:35, 1:40, 1:45, 1:50, 1:60, 1:70, 1:80, 1:90, 1:100, 1:110, 1:120, 1:130, 1:140, 1:150, 1:160, 1:170, 1:180, 1:200, 1:220, and a random value within the range consisting of any two points thereof. Preferably, in the method for preparing a catalyst component for olefin polymerization, the molar ratio of the magnesium source calculated in terms of magnesium element to the titanium source calculated in terms of titanium element is 1: (5-220), more preferably 1: (15-180), and further preferably 1: (18-150).

In the method for preparing a catalyst component for olefin polymerization in the invention, the dosage molar ratio of the magnesium source calculated in terms of magnesium element to the dosage of said electron donor may be 1:0.05, 1:0.1, 1:0.15, 1: 0.2, 1: 0.25, 1: 0.3, 1: 0.35, 1: 0.4, 1: 0.45, 1: 0.5, 1: 0.55, 1: 0.6, 1: 0.65, 1: 0.7, 1: 0.75, 1: 0.8, 1: 0.85, 1: 0.9, 1: 0.95, 1:1, 1: 1.2, or a random value within the range consisting of any two points thereof. Preferably, in the method for preparing a catalyst component for olefin polymerization in the invention, the molar ratio of the magnesium source calculated in terms of magnesium element to the dosage of said electron donor is 1: (0.05-1.2), more preferably 1: (0.1-1), further preferably 1: (0.15-0.9).

According to the present invention, in the method for preparing a catalyst component for olefin polymerization, the dosage molar ratio of the magnesium source calculated in terms of magnesium element, the titanium source calculated in terms of titanium element, and the electron donor is preferably 1: (15-180) : (0.1-1), more preferably 1: (18-150) : (0.15-0.9).

According to a specific embodiment of the invention, the invention further provides a method for preparing a catalyst component for olefin polymerization, the method comprises: contacting the magnesium-containing solid component with a titanium compound to carry out the reaction, and adding an electron donor containing furan compounds and diether compounds. In the preparation process of the catalyst component of the invention, the titanium compound may be used in an amount of 5-220 mole, preferably 10-200 mole, relative to per mole of magnesium; the electron donor may be used in an amount of 0.05-1.2 mole, preferably 0.07-1.0 mole, more preferably 0.1-0.8 mole, relative to per mole of magnesium.

The third aspect of the present invention provides a catalyst system for olefin polymerization, the catalyst system comprises:

(1) the catalyst component according to the first aspect and/or the catalyst component prepared with the method according to the second aspect;
(2) at least one kind of aluminum alkyl; and
(3) an optional other electron donor.

According to the present invention, the dosage of said aluminum alkyl may be a conventional dosage in the field. Preferably, the molar ratio of said aluminum alkyl calculated in terms of aluminum element to said catalyst component calculated in terms of titanium element is (1-2,000) :1, more preferably (20-500) :1, further preferably (30-300) : 1.

According to the present invention, the dosage of said other electron donor may be a conventional dosage in the field. Preferably, the molar ratio of the other electron donor to the aluminum alkyl compound calculated in terms of aluminum element is 1: (1-300), more preferably 1: (2-100).

According to the invention, the aluminum alkyl may be any of the various aluminum alkyls conventionally used in the art, for example, the aluminum alkyl may be represented by the general formula $A1R''_{n1}X^1_{3-n1}$, wherein R" is $C_1$-$C_8$ alkyl, the hydrogen on said alkyl is optionally substituted by a halogen atom, $X^1$ is halogen, n1 is an integer $0< n1\leq 3$. Specific examples of the $C_1$-$C_8$ alkyl may include, but are not limited to: methyl, ethyl, propyl, n-butyl, isobutyl, pentyl, hexyl, n-heptyl, n-octyl, and the halogen may be fluorine, chlorine, bromine, iodine.

According to the invention, the aluminum alkyl is preferably one or more selected from the group consisting of triethyl aluminum, tri-isobutyl aluminum, tri-n-butyl aluminum, tri-n-hexyl aluminum, diethyl aluminum monochloride, diisobutyl aluminum monochloride, di-n-butyl aluminum monochloride, di-n-hexyl aluminum monochloride, monoethyl aluminum dichloride, mono-isobutyl aluminum dichloride, mono-n-butyl aluminum dichloride and mono-n-hexyl aluminum dichloride.

According to the present invention, the other electron donor may be any of various external electron donors commonly used in the art, for example, the other electron donor may be at least one selected from the group consisting of carboxylic acid, carboxylic anhydride, carboxylic ester, ketone, ether, alcohol, lactone, organophosphorus compound and organosilicon compound.

Preferably, said other electron donor is selected from silicon compounds containing at least one Si-$OR_{19}$ bond and having a structure represented by general formula $(R_{17})_x(R_{18})_ySi(OR_{19})_z$, wherein $R_{17}$, $R_{18}$ and $R_{19}$ are each independently $C_1$-$C_{18}$ hydrocarbyl, optionally containing heteroatoms; x and y are each independently an integer of 0-2, z is an integer of 1-3, and the sum of x, y and z is 4. $R_{17}$ and $R_{18}$ are preferably $C_3$-$C_{10}$ alkyl and $C_3$-$C_{10}$ cycloalkyl, optionally containing heteroatoms; $R_{19}$ is preferably $C_1$-$C_{10}$ alkyl, optionally containing heteroatoms. More preferably, the other electron donor is at least one selected from the group consisting of cyclohexyl methyl dimethoxy silane, diisopropyl dimethoxy silane, di-n-butyl dimethoxy silane, diisobutyl dimethoxy silane, diphenyl dimethoxy silane, methyl-t-butyl dimethoxy silane, dicyclopentyl dimethoxy silane, 2-ethylpiperidinyl-2-t-butyl dimethoxy silane, (1,1,1-trifluoro-2-propyl)-2-ethylpiperidinyl dimethoxy silane, and (1,1,1-trifluoro-2-propyl)-methyl dimethoxy silane.

According to the invention, during the preparation process of the catalyst system for olefin polymerization, the aluminum alkyl and optionally other electron donor may be respectively mixed with a catalyst component for olefin polymerization and then carry out the reaction, or the aluminum alkyl compound may be initially mixed with the optionally other electron donors, and then blended with a catalyst component for olefin polymerization and performed the reaction.

The fourth aspect of the present invention provides an use of the catalyst component according to the first aspect and/or the catalyst component prepared with the method according to the second aspect and/or the catalyst system according to the third aspect in an olefin polymerization.

When the catalyst system of the invention is used in an olefin polymerization reaction, the catalyst component, aluminum alkyl, and optionally other electron donor may be separately added into a polymerization reactor, or the catalyst component, aluminum alkyl, and optionally other electron donor may be mixed and added into the polymerization reactor, or the olefin may be prepolymerized with a prepolymerization method well-known in the industry and added into the polymerization reactor. According to a preferred embodiment of the invention, the catalyst is subjected to a prepolymerization reaction with propylene and/or other $\alpha$-olefin monomers after precontacting and reacting the catalyst component, aluminum alkyl, and optionally other electron donor, and prior to the polymerization reaction. The prepolymerization reaction temperature may be within the range of 5-40°C, preferably within the range of 10-30°C.

In the invention, the specific kind of olefin, the method and conditions for the olefin polymerization reaction can be conventionally selected according to the prior art.

The fifth aspect of the present invention provides an olefin polymerization method, the olefin polymerization method comprises: carrying out an olefin polymerization reaction in the presence of the catalyst component according to the first aspect and/or the catalyst component prepared with the method according to the second aspect and/or the catalyst system according to the third aspect.

According to the invention, preferably, the olefin is at least one selected from the compounds represented by the formula $CH_2$=CHR‴, wherein R‴ is hydrogen, $C_1$-$C_6$ alkyl, $C_6$-$C_{12}$ aryl.

According to the present invention, the polymerization reaction of said olefin can be carried out according to the

existing methods, specifically, the polymerization reaction is carried out under the protection of an inert gas, in a liquid phase monomer or an inert solvent containing a polymerzation monomer, or in a gas phase, or by a combined polymerization process in a gas-liquid phase. The polymerization reaction temperature may be generally within the range of 0-150°C, preferably within the range of 60-90°C. The polymerization reaction pressure may be normal pressure or higher, for example, the pressure may be 0.01-10MPa, preferably 0.01-5MPa, more preferably 0.1-4MPa, and all of the pressures in the present invention are gauge pressures. During the polymerization process, hydrogen may be added into the reaction system as a polymer molecular weight modifier to adjust the molecular weight and melt index of the polymer. In addition, the kinds and dosages of the inert gas and the solvent are well-known among those skilled in the art during the polymerization reaction of olefins, the content will not be repeatedly described herein. According to the invention, before the polymerization reaction, the catalyst component and the olefin can be subjected to a prepolymerization reaction; the prepolymerization reaction temperature is 5-40°C, preferably 10-30°C.

Each of the parameters not defined in the present invention pertains to the conventional technical means in the field.

The present invention will be described in detail below with reference to examples.

Unless otherwise specified in the invention, the raw materials used in the examples and comparative examples were those disclosed in the prior art, for example, the raw materials may be directly purchased or prepared according to the preparation method disclosed in the prior art.

The content of titanium in the catalyst component of the invention can be measured according to the colorimetry. Specifically, 0.2-0.5g of sample was dissolved with 50mL of 2N $H_2SO_4$, filtered the upper floatage, extracted the clear liquid and waited for the color comparison; 2N H2SO4 solution was used as a blank, the cuvette with a thickness of 1cm was used, the absorbance E1 of the cuvette was measured under the wavelength of 410μm, 1 droplet of 30 wt% $H_2O_2$ was then dripped, shook up, the absorbance E2 was measured, the titanium content Ti (%) was calculated according to the following formula:

$$Ti\%=[(E2 - E1)\times100)/(K\cdot L\cdot W\cdot 100)]\times100\%$$

In the formula, W denoted the weight of a sample (g); L denoted the cuvette thickness (cm); K denoted the specific extinction coefficient (K=15.52); E1 denoted the absorbance of a blank; E2 denoted the absorbance of a sample.

The content of magnesium in the catalyst component of the invention can be measured according to the EDTA (Ethylene Diamine Tetraacetic Acid) titration method. Specifically, 0.2-0.5g of a sample was taken and placed in a 250mL conical flask, dissolved by adding 20-30mL of 2N $H_2SO_4$ solution, added 20mL of triethanolamine (1+2) standard solution, adjusted pH =10 with 20 wt% NaOH solution, shook the conical flask, added 10mL of a buffer solution with pH =10, added 6 droplets of $H_2O_2$ with a concentration of 30% and 30-50mL of distilled water, further added a small amount of chrome black T indicator, shook up, titrated with 0.02N EDTA solution to an end point that the color was changed from magenta to blue (disappearance of violet), and the magnesium content Mg (%) was calculated according to the following formula:

$$Mg\ (\%) = [(VE\cdot NE\times24.31)/(G\cdot1000)]\times100\%$$

In the formula, G denoted the sample mass (g); VE denoted the amount of consumed EDTA (mL); NE denoted an equivalent number of EDTA solution; 24.31 was atomic weight of magnesium.

In the invention, the catalyst component was weighed, dissolved in methanol, and then subjected to membrane filtration to measure the content of furan compounds in the catalyst component. The content of furan compounds in the catalyst component of the invention was tested by 7890A-5975C gas chromatography-mass spectrometer (GC-MS) manufactured by the Agilent Co., Ltd.. Chromatographic conditions were as follows: HP-5 MS UI gas chromatography column (30m×0.25mm×0.25μm), programmed temperature-rise, the temperature was kept at 35°C for 3min, then raised to 250°C at a temperature-rise rate of 10°C/min, the temperature was kept at 250°C for 3min. The carrier gas was helium (He), the flow rate was 1.0mL/min, split-flow sample injection was performed with the split-flow ratio of 50:1, the temperature of a sample inlet was 250°C, and the temperature of a transmission line was 250°C. The mass spectrometry conditions were as follows: a quadrupole mass spectrometer, an EI ionization source, an electron energy of 70eV, a source temperature of 200°C, a full-scanning acquisition mode, and a mass range of m/z 20-400.

In the invention, the catalyst component was weighed and then subjected to an acidolysis with dilute hydrochloric acid, extracted with cyclohexane, the content of diether compounds in the catalyst component was subsequently measured. The content of diether compounds in the catalyst component of the invention was measured by 7890 gas chromatograph manufactured by the Agilent Co., Ltd. Chromatographic column: HP-INNO WAX (60m×0.530mm×1μm), internal standard method, internal standard substance: pentyl ester.

Molecular weight distribution (Mw/Mn) of the polymer of the present invention: it was measured by the PL-GPC220 type gel permeation chromatograph manufactured by the Polymer Laboratories Company in the United Kingdom

(UK), the solvent was trichlorobenzene, the test temperature was 150°C, the standard sample was polystyrene, the flow rate was 1.0mL/min, and 3×Plgel 10mMIXED-B 300×7.5nm column was used.

The melt index of polymer in the invention was measured under a load of 2.16 kg at 230°C according to the China National Standard GB3682-2000.

The isotactic index of the polymer in the invention was measured with the heptane extraction method.

The average particle diameter and particle size distribution of the catalyst component and its carrier in the present invention were measured using the Masters Sizer 2000 particle size analyzer (manufactured by Malvern Instruments Ltd.);

The content of fine powder in the polymer of the invention was tested by the MICROTRAC MRB camsizer P4, and the data in the table illustrated the content of the polymer which was lower than 100 meshes (mesh/inch) after being screened by a standard screen, namely the content of the polymer which was capable of passing through the screen aperture of 150μm.

The Example A below served to illustrate preparation method of a catalyst component and the preparation process of polymer using alcohol adduct of magnesium halide as a carrier, and using furan compounds and diether compounds as an electron donor.

Example 1A

(1) Preparation of the catalyst component

In a 300mL glass reaction flask, 90mL of titanium tetrachloride was added and cooled to -20°C, 38mmol of magnesium dichloride alcohol adduct (represented by structural formula $MgCl_2 \cdot 2.6C_2H_5OH$) carrier calculated in terms of magnesium element was added therein, and stirred at that temperature for 40min, then heated to 112°C, 2.6mmol of (3R,3aR,6S,6aR)-3,6-dimethoxy hexahydrofuro [3,2-b] furan and 8mmol of 2-isopropyl-2-isopentyl-1,3-dimethoxy propane were added during the heating process, the temperature was maintained at 110°C for 30min, the liquid was filtered, washed with titanium tetrachloride, subsequently washed with hexane, and dried under vacuum to obtain a catalyst component Cat-1A for olefin polymerization. The molar ratio of the furan compounds to the diether compounds in the catalyst component was shown in Table 1. Upon testing, the content of magnesium element was 5.65 parts by weight and the content of electron donor was 5.55 parts by weight, relative to per part by weight of titanium element in the catalyst component Cat-1A.

(2) Liquid-phase bulk polymerization of propylene

The liquid-phase bulk polymerization of propylene was carried out in a 5L stainless steel high-pressure reaction kettle. 2mL of a hexane solution of triethyl aluminum (with a concentration of 0.5 mmol/mL), 0.4mL of a hexane solution of cyclohexyl methyl dimethoxy silane (CHMMS) (with a concentration of 0.1 mmol/mL), and 9mg of the catalyst component for olefin polymerization Cat-1A were added into the reaction kettle in sequence under the protection of nitrogen gas. The reaction kettle was closed, hydrogen gas (the used amount of hydrogen gas was shown in Table 1) and 2.3L of liquid propylene were added. The temperature was raised to 70°C, after 1 h of reaction, the reaction kettle was cooled, the pressure was relieved, the material was discharged, the obtained propylene homopolymer was dried, weighed and analyzed, the results were shown in Table 1.

Example 2A

The catalyst component was prepared and the liquid phase bulk polymerization of propylene was carried out according to the method in Example 1A, except that 2-isopropyl-2-isopentyl-1,3-dimethoxy propane was not added during the heating process, the addition amounts of (3R,3aR,6S,6aR)-3,6-dimethoxy hexahydrofuro [3,2-b] furan and 9,9-bis (methoxymethyl) fluorene were 5mmol and 7.5mmol, respectively, a catalyst component Cat-2A for olefin polymerization was obtained. Upon testing, the content of magnesium element was 5.22 parts by weight and the content of electron donor was 5.63 parts by weight, relative to per part by weight of titanium element in the catalyst component Cat-2A.

Example 3A

The catalyst component was prepared and the liquid phase bulk polymerization of propylene was carried out according to the method in Example 1A, except that the addition amounts of (3R,3aR,6S,6aR)-3,6-dimethoxy hexahydrofuro [3,2-b] furan and 2-isopropyl-2-isopentyl-1,3-dimethoxy propane were 7mmol and 6mmol, respectively, a catalyst component Cat-3A for olefin polymerization was obtained. Upon testing, the content of magnesium element was 5.20 parts by weight and the content of electron donor was 4.71 parts by weight, relative to per part by weight of titanium element in the catalyst component Cat-3A.

Example 4A

The catalyst component was prepared and the liquid phase bulk polymerization of propylene was carried out according to the method in Example 1A, except that the addition amounts of (3R,3aR,6S,6aR)-3,6-dimethoxy hexahydrofuro [3,2-b] furan and 2-isopropyl-2-isopentyl-1,3-dimethoxy propane were 2mmol and 8mmol, respectively, a catalyst component Cat-4A for olefin polymerization was obtained. Upon testing, the content of magnesium element was 5.74 parts by weight and the content of electron donor was 5.48 parts by weight, relative to per part by weight of titanium element in the catalyst component Cat-4A.

Example 5A

The catalyst component was prepared and the liquid phase bulk polymerization of propylene was carried out according to the method in Example 1A, except that the addition amounts of (3R,3aR,6S,6aR)-3,6-dimethoxy hexahydrofuro [3,2-b] furan and 2-isopropyl-2-isopentyl-1,3-dimethoxy propane were 8.7mmol and 3.2mmol, respectively, a catalyst component Cat-5A for olefin polymerization was obtained. Upon testing, the content of magnesium element was 4.67 parts by weight and the content of electron donor was 3.62 parts by weight, relative to per part by weight of titanium element in the catalyst component Cat-5A.

Example 6A

(1) Preparation of the catalyst component

In a 300mL glass reaction flask, 80mL of titanium tetrachloride was added and cooled to -15°C, 38mmol of magnesium dichloride alcohol adduct (represented by structural formula $MgCl_2 \cdot 2.6C_2H_5OH$) carrier calculated in terms of magnesium element was added therein, and stirred at that temperature for 30min, then heated to 115°C, 3mmol of (3R,3aR,6S,6aR)-3,6-dimethoxy hexahydrofuro [3,2-b] furan and 8.2mmol of 2-isopropyl-2-isopentyl-1,3-dimethoxy propane were added during the heating process, the temperature was maintained at 115°C for 30min, the liquid was filtered, washed with titanium tetrachloride, subsequently washed with hexane, and dried under vacuum to obtain a catalyst component Cat-6A for olefin polymerization. Upon testing, the content of magnesium element was 6.19 parts by weight and the content of electron donor was 6.63 parts by weight, relative to per part by weight of titanium element in the catalyst component Cat-6A.

(2) The liquid-phase bulk polymerization of propylene was the same as that in Example 1A.

Comparative Example 1A

The catalyst component was prepared and the liquid phase bulk polymerization of propylene was carried out according to the method in Example 1A, except that (3R,3aR,6S,6aR)-3,6-dimethoxy hexahydrofuro [3,2-b] furan was not added during the process of preparing the catalyst component, only 11 mmol of 2-isopropyl-2-isopentyl-1,3-dimethoxy propane was added, a catalyst component DCat-1A for olefin polymerization was obtained.

Comparative Example 2A

The catalyst component was prepared and the liquid phase bulk polymerization of propylene was carried out according to the method in Example 1A, except that 2-isopropyl-2-isopentyl-1,3-dimethoxy propane was not added during the process of preparing the catalyst component, only 11 mmol of (3R,3aR,6S,6aR)-3,6-dimethoxy hexahydrofuro [3,2-b] furan was added, a catalyst component DCat-2A for olefin polymerization was obtained.

Comparative Example 3A

The catalyst component was prepared and the liquid phase bulk polymerization of propylene was carried out according to the method in Example 1A, except that 2-isopropyl-2-isopentyl-1,3-dimethoxy propane was replaced with equimolar 4-ethyl-3,5-heptanediol dibenzoate, a catalyst component DCat-3A for olefin polymerization was obtained.

Table 1

| | Catalyst component | $n_{furan}$: diether | Hydrogen gas (NL) | Polymer molecular weight distribution Mw/Mn | Melt index (g/10min) | Isotactic index (wt%) |
|---|---|---|---|---|---|---|
| Example 1A | Cat-1A | 0.07 | 1.5 | 6.5 | 12.6 | 97.9 |
| | | | 6.5 | 5.5 | 81.3 | 96.6 |
| Example 2A | Cat-2A | 0.16 | 1.5 | 5.9 | 19.2 | 97.4 |
| | | | 6.5 | 5.2 | 109.6 | 96.4 |
| Example 3A | Cat-3A | 0.32 | 1.5 | 6.0 | 21.6 | 96.7 |
| | | | 6.5 | 5.4 | 121.5 | 95.2 |
| Example 4A | Cat-4A | 0.05 | 1.5 | 6.1 | 13.3 | 96.9 |
| | | | 6.5 | 5.6 | 79.2 | 95.6 |
| Example 5A | Cat-5A | 1.08 | 1.5 | 6.8 | 11.6 | 96.3 |
| | | | 6.5 | 6.2 | 76.8 | 94.9 |
| Example 6A | Cat-6A | 0.09 | 1.5 | 6.9 | 13.8 | 97.7 |
| | | | 6.5 | 5.7 | 98.6 | 96.4 |
| Comparative Example 1A | DCat-1A | / | 1.5 | 5.9 | 9.4 | 96.2 |
| | | | 6.5 | 6.3 | 74.6 | 94.4 |
| Comparative Example 2A | DCat-2A | / | 1.5 | 7.8 | 10.3 | 89.8 |
| | | | 6.5 | 8.2 | 63.8 | 87.1 |
| Comparative Example 3A | DCat-3A | / | 1.5 | 6.2 | 4.9 | 94.1 |
| | | | 6.5 | 7.1 | 41.0 | 91.3 |
| Note: $n_{furan:\ diether}$ represents the molar ratio of furan compounds to diether compounds. | | | | | | |

As can be seen from Table 1, when the electron donor contains a certain proportion of furan compounds and diether compounds, the catalyst has high hydrogen adjustment sensitivity and stereoscopic directionality, and the balance between hydrogen adjustment sensitivity and stereoscopic directionality is good, the molecular weight distribution of the prepared low-melt index polymer is wider than the molecular weight distribution of the high-melt index polymer, and the catalyst component of the present invention does not contain a phthalate ester compound (plasticizer).

The following preparation examples and example B served to illustrate the preparation methods of catalyst components and the preparation of polymers using a magnesium-containing solid component as a carrier and using furan compounds and diether compounds as electron donors.

Preparation Example 1 magnesium-containing solid component (catalyst carrier)

The preparation example served to illustrate an olefin polymerization catalyst carrier provided by the invention provided and a preparation method therefor.

In a 0.6L reaction kettle, 0.08mol of magnesium chloride, 0.96mol of ethanol, 1g of α-sulfur, and 0.5g of PVP (polyvinyl pyrrolidone) as a surfactant were added, the materials were stirred and the temperature was raised to 90°C. Reaction at constant temperature was performed for 2h, 0.48mol of epoxy chloropropane was added, reaction was carried out for 0.5h, the pressure filtration was then implemented, the pressure filtration product was washed with hexane for 5 times, the washed pressure filtration product was subjected to vacuum drying to obtain a catalyst carrier Z1 for olefin polymerization.

The olefin polymerization catalyst carrier Z1 had an average particle diameter (D50) of 15μm and a particle size distribution ((D90-D10)/D50) of 0.6. When the observation was carried out by an optical microscope, the particle morphology of the olefin polymerization catalyst carrier Z1 was regular, the surface was smooth, the carrier was basically spherical, the particle size distribution was relatively concentrated, and the special-shaped particles were basically non-existent.

According to the GC-MS, elemental analysis and nuclear magnetic characterization, the structural formula of carrier Z1 was as follows:

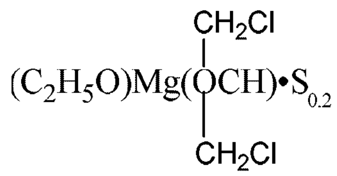

Preparation Example 2 magnesium-containing solid component (catalyst carrier)

The preparation example served to illustrate an olefin polymerization catalyst carrier provided by the invention provided and a preparation method therefor.

In a 0.6L reaction kettle, 300mL of white oil, 0.08mol of magnesium chloride, 0.48mol of ethanol, 0.3g of β-sulfur, 1g of PVP (polyvinyl pyrrolidone) as a surfactant were added, the materials were stirred and the temperature was raised to 100°C. Reaction at constant temperature was performed for 1h, 0.16mol of epoxy chloropropane was added, the reaction at constant temperature was continuously carried out for 20 min, the pressure filtration was then implemented, the pressure filtration product was washed with hexane for 5 times, the washed pressure filtration product was finally subjected to vacuum drying to obtain an olefin polymerization catalyst carrier Z2.

The olefin polymerization catalyst carrier Z2 had an average particle diameter (D50) of 18μm and a particle size distribution ((D90-D10)/D50) of 0.7. When the observation was carried out by an optical microscope, the particle morphology of the olefin polymerization catalyst carrier Z2 was regular, the surface was smooth, the carrier was basically spherical, the particle size distribution was relatively concentrated, and the special-shaped particles were basically non-existent.

According to the GC-MS, elemental analysis and nuclear magnetic characterization, the structural formula of carrier Z1 was as follows:

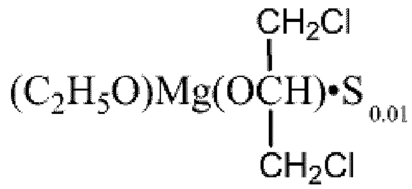

Example 1B

(1) Preparation of the catalyst component

In a 300mL glass reaction flask, 80mL of titanium tetrachloride was added and cooled to -20°C, 8g of the solid component Z1 was added, and stirred at that temperature for 40min, then heated to 115°C, 2.3mmol of (3R,3aR,6S,6aR)-3,6-dimethoxy hexahydrofuro [3,2-b] furan and 8.9mmol of 2-isopropyl-2-isopentyl-1,3-dimethoxy propane were added during the heating process, the temperature was maintained at 110°C for 1h, the liquid was filtered, washed with titanium tetrachloride, subsequently washed with hexane, and dried under vacuum to obtain a solid catalyst component Cat-1B. The molar ratio of the furan compounds to the diether compounds in the catalyst component was shown in Table 2. Upon testing, the content of magnesium element was 5.06 parts by weight and the content of electron donor was 5.87 parts by weight, relative to per part by weight of titanium element in the catalyst component Cat-1B.

(2) Liquid-phase bulk polymerization of propylene

The liquid-phase bulk polymerization of propylene was carried out in a 5L stainless steel high-pressure reaction kettle. 5mL of a hexane solution of triethyl aluminum (with a concentration of 0.5 mmol/mL), 1mL of a hexane solution of cyclohexyl methyl dimethoxy silane (CHMMS) (with a concentration of 0.1 mmol/mL), and 7.5mg of the solid catalyst component Cat-1B were added into the reaction kettle in sequence under the protection of nitrogen gas. The reaction kettle was closed, hydrogen gas (the used amount of hydrogen gas was shown in Table 2) and 2.3L of liquid propylene were added. The temperature was raised to 70°C, after 1h of reaction, the reaction kettle was cooled, the pressure was relieved, the material was discharged, the obtained propylene homopolymer was dried, weighed and analyzed, the results were shown in Table 3.

Example 2B

The catalyst component was prepared and the liquid phase bulk polymerization of propylene was carried out according to the method in Example 1B, except that the solid component Z2 was added, 3.2mmol of (3R,3aR,6S,6aR)-3,6-dimethoxy hexahydrofuro [3,2-b] furan and 7.0mmol of 9,9-bis (methoxymethyl) fluorene were added during the heating process, a solid catalyst component Cat-2B was obtained. Upon testing, the content of magnesium element was 4.85 parts by weight and the content of electron donor was 5.53 parts by weight, relative to per part by weight of titanium element in the catalyst component Cat-2B.

Example 3B

The catalyst component was prepared and the liquid phase bulk polymerization of propylene was carried out according to the method in Example 1B, except that the solid component Z2 was added, 4.7mmol of (3R,3aR,6S,6aR)-3,6-dimethoxy hexahydrofuro [3,2-b] furan and 6.5mmol of 2-isopropyl-2-isopentyl-1,3-dimethoxy propane were added during the heating process, a solid catalyst component Cat-3B was obtained. Upon testing, the content of magnesium element was 4.63 parts by weight and the content of electron donor was 4.45 parts by weight, relative to per part by weight of titanium element in the catalyst component Cat-3B.

Example 4B

The catalyst component was prepared and the liquid phase bulk polymerization of propylene was carried out according to the method in Example 1B, except that 5.8mmol of (3R,3aR,6S,6aR)-3,6-dimethoxy hexahydrofuro [3,2-b] furan and 6.3mmol of 2-isopropyl-2-isopentyl-1,3-dimethoxy propane were respectively added during the heating process, a solid catalyst component Cat-4B was obtained. Upon testing, the content of magnesium element was 4.78 parts by weight and the content of electron donor was 4.64 parts by weight, relative to per part by weight of titanium element in the catalyst component Cat-4B.

Example 5B

The catalyst component was prepared and the liquid phase bulk polymerization of propylene was carried out according to the method in Example 1B, except that 7.5mmol of (3R,3aR,6S,6aR)-3,6-dimethoxy hexahydrofuro [3,2-b] furan and 4.2mmol of 2-isopropyl-2-isopentyl-1,3-dimethoxy propane were respectively added during the heating process, a solid catalyst component Cat-5B was obtained. Upon testing, the content of magnesium element was 4.64 parts by weight and the content of electron donor was 4.22 parts by weight, relative to per part by weight of titanium element in the catalyst component Cat-5B.

Comparative Example 1B

The catalyst component was prepared and the liquid phase bulk polymerization of propylene was carried out according to the method in Example 1B, except that during the preparation process of the catalyst component, 8g of a magnesium halide carrier (prepared according to the method disclosed by Example 1 of CN1267508C) was added for replacing the solid component Z1, the (3R,3aR,6S,6aR)-3,6-dimethoxy hexahydrofuro [3,2-b] furan was substituted with the same molar amount of 2-isopropyl-2-isopentyl-1,3-dimethoxy propane, a catalyst component DCat-1B for olefin polymerization was obtained.

Comparative Example 2B

The catalyst component was prepared and the liquid phase bulk polymerization of propylene was carried out according to the method in Example 1B, except that during the preparation process of the catalyst component, 8g of a magnesium halide carrier (prepared according to the method disclosed by Example 1 of CN1267508C) was added for replacing the solid component Z1, the 2-isopropyl-2-isopentyl-1,3-dimethoxy propane was substituted with the same molar amount of (3R,3aR,6S,6aR)-3,6-dimethoxy hexahydrofuro [3,2-b] furan, a catalyst component DCat-2B for olefin polymerization was obtained.

Table 2

| | Catalyst component | Span | $n_{furan: diether}$ |
|---|---|---|---|
| Example 1B | Cat-1B | 0.91 | 0.06 |

(continued)

| | Catalyst component | Span | $n_{furan: diether}$ |
|---|---|---|---|
| Example 2B | Cat-2B | 0.76 | 0.13 |
| Example 3B | Cat-3B | 0.88 | 0.17 |
| Example 4B | Cat-4B | 1.08 | 0.25 |
| Example 5B | Cat-5B | 1.10 | 0.86 |
| Comparative Example 1B | DCat-1B | 1.70 | / |
| Comparative Example 2B | DCat-2B | 1.53 | / |
| Note: Span represents the width of the particle size distribution, Span=(D90-D10)/D50; $n_{furan: diether}$ represents the molar ratio of furan compounds to diether compounds. | | | |

Table 3

| | Catalyst component | Hydrogen gas (NL) | Polymerization activity (kgPP/gcat) | Polymer molecular weight distribution Mw/Mn | Polymer melt index (g/10min) | Isotactic index (wt%) | Content of fine powder in the polymer (wt%) |
|---|---|---|---|---|---|---|---|
| Example 1B | Cat-1B | 1.5 | 43.1 | 6.5 | 11.5 | 97.3 | 0.02 |
| | | 6.5 | 52.2 | 5.7 | 113 | 95.5 | 0.05 |
| Example 2B | Cat-2B | 1.5 | 44.5 | 6.4 | 12.3 | 97.6 | 0.01 |
| | | 6.5 | 56.1 | 5.8 | 117 | 96.0 | 0.04 |
| Example 3B | Cat-3B | 1.5 | 45.1 | 6.3 | 15.6 | 97.2 | 0.03 |
| | | 6.5 | 57.3 | 5.5 | 134 | 95.4 | 0.06 |
| Example 4B | Cat-4B | 1.5 | 42.1 | 7.1 | 14.9 | 97.1 | 0.03 |
| | | 6.5 | 53.1 | 5.9 | 142 | 95.2 | 0.08 |
| Example 5B | Cat-5B | 1.5 | 39.2 | 7.0 | 12.9 | 96.6 | 0.05 |
| | | 6.5 | 48.7 | 6.2 | 86.7 | 94.9 | 0.10 |
| Comparative Example 1B | DCat-1B | 1.5 | 37.2 | 6.0 | 11.1 | 96.1 | 0.07 |
| | | 6.5 | 46.7 | 6.4 | 80.2 | 94.0 | 0.11 |
| Comparative Example 2B | DCat-2B | 1.5 | 2.0 | 7.9 | 10.8 | 88.7 | 0.10 |
| | | 6.5 | 2.6 | 8.5 | 65.1 | 86.9 | 0.17 |

As can be seen from the results of Examples and Comparative Examples in Table 2 and Table 3, the particle size distribution of the catalyst component in the invention is narrow, when the catalyst component of the invention is used, the catalyst has high hydrogen adjustment sensitivity and stereoscopic directionality and high polymerization activity, the produced polypropylene has a low content of fine powder content, and the molecular weight distribution of the prepared low-melt index polymer is wider than the molecular weight distribution of the high-melt index polymer, and the catalyst component of the present invention does not contain a phthalate ester compound (plasticizer).

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A catalyst component for olefin polymerization, is **characterized in that** the catalyst component comprises a magnesium element, a titanium element, a halogen and an electron donor; wherein the electron donor comprises furan compounds and diether compounds; the furan compounds are at least one selected from the furan compounds represented by formula (I),

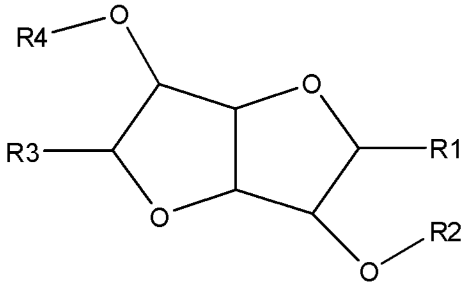

Formula (I)

in formula (I), R1 and R3 are each independently selected from hydrogen, $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl; R2 and R4 are each independently selected from the group consisting of $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ aralkyl or $C_7$-$C_{10}$ alkaryl.

2. The catalyst component according to claim 1, wherein the content of furan compounds is 0.01-2 mole, preferably 0.03-1.2 mole relative to per mole of diether compounds;
and/or, R2 and R4 are each independently selected from $C_1$-$C_3$ straight chain alkyl.

3. The catalyst component according to claim 1 or 2, wherein the furan compounds are at least one selected from the furan compounds represented by formula (1-1),

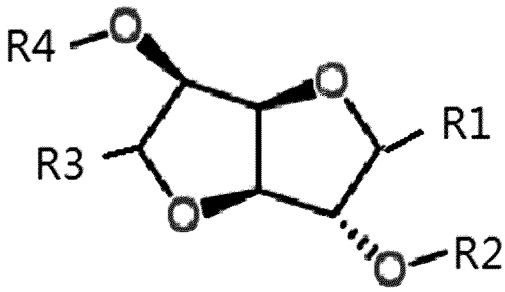

Formula (I-1);

wherein, R1, R2, R3 and R4 in formula (1-1) are as defined in claim 1 or 2;
preferably, the furan compounds are at least one selected from the group consisting of (3R,3aR,6S,6aR)-3-methoxy-6-propoxy hexahydrofuro [3,2-b] furan, (3R,3aR,6S,6aR)-3-methoxy-6-ethoxy hexahydrofuro [3,2-b] furan, (3R,3aR,6S,6aR)-3,6-dimethoxy hexahydrofuro [3,2-b] furan, (3R,3aR,6S,6aR)-3,6-diethoxy hexahydrofuro [3,2-b] furan, (3R,3aR,6S,6aR)-3,6-dipropoxy hexahydrofuro [3,2-b] furan.

4. The catalyst component according to any one of claims 1-3, wherein the diether compounds are at least one selected from diether compounds represented by formula (II),

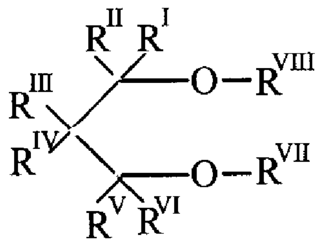

Formula (II)

in formula (II), $R^1$, $R^{II}$, $R^{III}$, $R^{IV}$, $R^V$ and $R^{VI}$ are the same or different, and are each independently selected from hydrogen, halogen atoms, $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl, and the groups $R^I$-$R^{VI}$ can be optionally bonded to form a ring; $R^{VII}$ and $R^{VIII}$ are the same or different, and are independently selected from the group consisting of $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl.

**5.** The catalyst component according to claim 4, wherein $R^I$, $R^{II}$, $R^{III}$, $R^{IV}$, $R^V$ and $R^{VI}$ are each independently selected from hydrogen, $C_1$-$C_{20}$ straight chain alkyl, and $C_3$-$C_{20}$ branched chain alkyl;

and/or $R^{III}$ and $R^{IV}$ are bonded to form a fluorene ring;
and/or, $R^{VII}$ and $R^{VIII}$ are each independently selected from the group consisting of $C_1$-$C_5$ straight chain alkyl and $C_3$-$C_5$ branched chain alkyl.

**6.** The catalyst component according to any one of claims 1-5, wherein the diether compounds are at least one selected from the group consisting of 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2,2-dicyclohexyl-1,3-dimethoxypropane, 2,2-dicyclopentyl-1,3-dimethoxypropane, 2,2-diethyl-1,3-dimethoxypropane, 2,2-dipropyl-1,3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3-dimethoxypropane, 2-methyl-2-isopropyl-1,3-dimethoxypropane, 2-methyl-2-phenyl-1,3-dimethoxypropane, 2-methyl-2-cyclohexyl-1,3-dimethoxypropane, 2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2-isobutyl-2-isopropyl-1,3-dimethoxypropane, 2-(1-methylbutyl)-2-isopropyl-1,3-dimethoxypropane, 2-isopropyl-2-isopentyl-1,3-dimethoxypropane, 2-phenyl-2-isopropyl-1,3-dimethoxypropane, 2-phenyl-2-sec-butyl-1,3-dimethoxypropane, 2-benzyl-2-isopropyl-1,3-dimethoxypropane, 2-cyclopentyl-2-isopropyl-1,3-dimethoxypropane, 2-cyclopentyl-2-sec-butyl-1,3-dimethoxypropane, 2-cyclohexyl-2-isopropyl-1,3-dimethoxypropane, 2-cyclohexyl-2-sec-butyl-1,3-dimethoxypropane, 2-isopropyl-2-sec-butyl-1,3-dimethoxypropane, 2-cyclohexyl-2-cyclohexylmethyl-1,3-dimethoxypropane and 9,9-bis (methoxymethyl) fluorene.

**7.** The catalyst component according to any one of claims 1-6, wherein the content of magnesium element is 2-18 parts by weight, preferably 3-16 parts by weight, the content of electron donor is 2-17 parts by weight, preferably 3-15 parts by weight, relative to each part by weight of titanium element;
and/or the source of magnesium element is at least one selected from magnesium halide, magnesium alcoholate, magnesium halogenated alcoholate, magnesium halide alcoholate adduct, magnesium halide adduct, and magnesium-containing solid component.

**8.** The catalyst component according to any one of claims 1-7, wherein the titanium element is derived from the titanium compounds represented by formula $Ti(OR')_{3-a}Z_a$ and/or $Ti(OR')_{4-b}Z_b$, wherein R' is $C_1$-$C_{20}$ alkyl, Z is F, Cl, Br or **I,** a is an integer of 1-3, b is an integer of 1-4;
preferably, the titanium element is derived from one or more sources selected from the group consisting of titanium tetrachloride, titanium tetrabromide, titanium tetraiodide, tributoxytitanium chloride, dibutoxytitanium dichloride, butoxytitanium trichloride, triethoxytitanium chloride, diethoxytitanium dichloride, ethoxytitanium trichloride and titanium trichloride.

**9.** A method for preparing a catalyst component for olefin polymerization, is **characterized in that** the method

comprises: mixing a magnesium source, a titanium source and an electron donor, wherein the electron donor comprises furan compounds and diether compounds; the furan compounds are at least one selected from the furan compounds represented by formula (I),

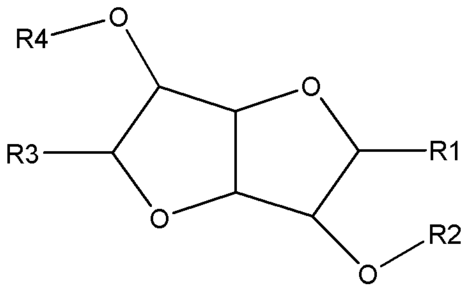

Formula (I)

in formula (I), R1 and R3 are each independently selected from hydrogen, $C_1$-$C_{20}$ straight chain alkyl, $C_3$-$C_{20}$ branched chain alkyl, $C_3$-$C_{20}$ cycloalkyl, $C_6$-$C_{20}$ aryl, $C_7$-$C_{20}$ aralkyl or $C_7$-$C_{20}$ alkaryl; R2 and R4 are each independently selected from the group consisting of $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ aralkyl or $C_7$-$C_{10}$ alkaryl.

**10.** The method according to claim 9, wherein the furan compounds are used in an amount of 0.1-3 mole, preferably 0.1-2 mole, further preferably 0.15-1.8 mole, relative to per mole of diether compounds.

**11.** A catalyst system for olefin polymerization, is **characterized in that** the catalyst system comprises:

(1) the catalyst component according to any one of claims 1-8 and/or the catalyst component prepared with the method according to claim 9 or 10;
(2) at least one kind of aluminum alkyl; and
(3) an optional other electron donor.

**12.** The catalyst system according to claim 11, wherein the molar ratio of said aluminum alkyl calculated in terms of aluminum element to said catalyst component calculated in terms of titanium element is (1-2,000) :1, preferably (20-500) :1, more preferably (30-300) : 1;
and/or the molar ratio of the other electron donor to the aluminum alkyl compound calculated in terms of aluminum element is 1:(1-300), preferably 1: (2-100).

**13.** The catalyst system according to claim 11 or 12, wherein the aluminum alkyl is represented by the general formula $A1R''_{n1}X^1_{3-n1}$, wherein R" is $C_1$-$C_8$ alkyl, the hydrogen on said alkyl is optionally substituted by a halogen atom, $X^1$ is halogen, n1 is an integer $0< n1\leq 3$;
preferably, the aluminum alkyl is one or more selected from the group consisting of triethyl aluminum, tri-isobutyl aluminum, tri-n-butyl aluminum, tri-n-hexyl aluminum, diethyl aluminum monochloride, diisobutyl aluminum monochloride, di-n-butyl aluminum monochloride, di-n-hexyl aluminum monochloride, monoethyl aluminum dichloride, mono-isobutyl aluminum dichloride, mono-n-butyl aluminum dichloride and mono-n-hexyl aluminum dichloride.

**14.** The catalyst system according to any one of claims 11-13, wherein the other electron donor is at least one selected from the group consisting of carboxylic acid, carboxylic anhydride, carboxylic ester, ketone, ether, alcohol, lactone, organophosphorus compound and organosilicon compound;
preferably, the other electron donor is at least one selected from the group consisting of cyclohexyl methyl dimethoxy silane, diisopropyl dimethoxy silane, di-n-butyl dimethoxy silane, diisobutyl dimethoxy silane, diphenyl dimethoxy silane, methyl-t-butyl dimethoxy silane, dicyclopentyl dimethoxy silane, 2-ethylpiperidinyl-2-t-butyl dimethoxy silane, (1,1,1-trifluoro-2-propyl)-2-ethylpiperidinyl dimethoxy silane, and (1,1,1-trifluoro-2-propyl)-methyl dimethoxy silane.

**15.** Use of the catalyst component according to any one of claims 1-8 and/or the catalyst component prepared with the method according to claim 9 or 10 and/or the catalyst system according to any one of claims 11-14 in an olefin polymerization.

**16.** An olefin polymerization method, is **characterized in that** the olefin polymerization method comprises: carrying out an olefin polymerization reaction in the presence of the catalyst component according to any one of claims 1-8 and/or

the catalyst component prepared with the method according to claim 9 or 10 and/or the catalyst system according to any one of claims 11-14;

preferably, the olefin is at least one selected from the compounds represented by the formula $CH_2$=CHR‴, wherein R‴ is hydrogen, $C_1$-$C_6$ alkyl, $C_6$-$C_{12}$ aryl;
preferably, the conditions of said polymerization reaction comprise: a temperature of 0-150°C, preferably 60-90°C; a pressure of 0.01-10MPa, preferably 0.01-5 MPa.

## INTERNATIONAL SEARCH REPORT

International application No.
**PCT/CN2024/099347**

**A. CLASSIFICATION OF SUBJECT MATTER**

C08F10/00(2006.01)i; C08F10/06(2006.01)i; C08F4/649(2006.01)i

According to International Patent Classification (IPC) or to both national classification and IPC

**B. FIELDS SEARCHED**

Minimum documentation searched (classification system followed by classification symbols)

IPC:C08F

Documentation searched other than minimum documentation to the extent that such documents are included in the fields searched

Electronic data base consulted during the international search (name of data base and, where practicable, search terms used)

CNTXT; ENTXT; DWPI; CNKI; WEB OF SCIENCE: 镁, 钛, 卤, 硫, 给电子体, 呋喃, 六氢呋喃并[3, 2-b]呋喃, 二醚, magnesium, titanium, halide, sulfur, electron donor, furan, hexahydrofuro[3, 2-b]furan, diether

**C. DOCUMENTS CONSIDERED TO BE RELEVANT**

| Category* | Citation of document, with indication, where appropriate, of the relevant passages | Relevant to claim No. |
|---|---|---|
| A | CN 115975078 A (CHINA PETROLEUM & CHEMICAL CORP. et al.) 18 April 2023 (2023-04-18)<br>entire document | 1-16 |
| A | CN 115975077 A (CHINA PETROLEUM & CHEMICAL CORP. et al.) 18 April 2023 (2023-04-18)<br>entire document | 1-16 |
| A | CN 111072805 A (CHINA PETROLEUM & CHEMICAL CORP. et al.) 28 April 2020 (2020-04-28)<br>entire document | 1-16 |
| A | CN 111072812 A (CHINA PETROLEUM & CHEMICAL CORP. et al.) 28 April 2020 (2020-04-28)<br>entire document | 1-16 |
| A | CN 116041581 A (CHINA PETROLEUM & CHEMICAL CORP. et al.) 02 May 2023 (2023-05-02)<br>entire document | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 September 2024** | **27 September 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2024/099347**

**C. DOCUMENTS CONSIDERED TO BE RELEVANT**

| Category* | Citation of document, with indication, where appropriate, of the relevant passages | Relevant to claim No. |
|---|---|---|
| A | FR 3078704 A1 (INSTITUT FRANCAIS DES MATERIAUX AGROSOURCES et al.) 13 September 2019 (2019-09-13)<br>entire document | 1-16 |
| A | JP H03243604 A (MITSUBISHI PETROCHEMICAL CO., LTD.) 30 October 1991 (1991-10-30)<br>entire document | 1-16 |
| A | US 5147839 A (MITSUBISHI PETROCHEMICAL CO., LTD.) 15 September 1992 (1992-09-15)<br>entire document | 1-16 |

Form PCT/ISA/210 (second sheet) (July 2022)

**INTERNATIONAL SEARCH REPORT**
**Information on patent family members**

International application No.
**PCT/CN2024/099347**

| Patent document cited in search report | Publication date (day/month/year) | Patent family member(s) | Publication date (day/month/year) |
|---|---|---|---|
| CN 115975078 A | 18 April 2023 | CN 115975078 B | 02 July 2024 |
| CN 115975077 A | 18 April 2023 | CN 115975077 B | 04 June 2024 |
| CN 111072805 A | 28 April 2020 | WO 2020078352 A1 | 23 April 2020 |
| | | CN 111072807 A | 28 April 2020 |
| | | CN 111072814 A | 28 April 2020 |
| | | CN 111072815 A | 28 April 2020 |
| | | TW 202031690 A | 01 September 2020 |
| | | SG 11202103779 A1 | 28 May 2021 |
| | | KR 20210080466 A | 30 June 2021 |
| | | BR 112021006289 A2 | 06 July 2021 |
| | | EP 3868796 A1 | 25 August 2021 |
| | | EP 3868796 A4 | 13 July 2022 |
| | | EP 3868796 B1 | 31 July 2024 |
| | | IN 202117021596 A | 29 October 2021 |
| | | US 2021340165 A1 | 04 November 2021 |
| | | US 11970510 B2 | 30 April 2024 |
| | | JP 2022504961 W | 13 January 2022 |
| | | JP 7479361 B2 | 08 May 2024 |
| | | RU 2021113479 A | 12 January 2023 |
| | | RU 2801219 C2 | 03 August 2023 |
| | | RU 2801219 C9 | 08 August 2023 |
| | | IN 536328 B | 03 May 2024 |
| CN 111072812 A | 28 April 2020 | CN 111072812 B | 24 May 2022 |
| CN 116041581 A | 02 May 2023 | CN 116041581 B | 02 July 2024 |
| FR 3078704 A1 | 13 September 2019 | FR 3078704 B1 | 20 March 2020 |
| JP H03243604 A | 30 October 1991 | JP 2807027 B2 | 30 September 1998 |
| US 5147839 A | 15 September 1992 | JPH 03234707 A | 18 October 1991 |
| | | JP 2874934 B2 | 24 March 1999 |
| | | FI 910523 A0 | 04 February 1991 |
| | | FI 910523 A | 09 August 1991 |
| | | FI 104976 B | 15 May 2000 |
| | | DE 69116182 D1 | 22 February 1996 |
| | | DE 69116182 T2 | 15 May 1996 |
| | | EP 0441620 A2 | 14 August 1991 |
| | | EP 0441620 A3 | 04 March 1992 |
| | | EP 0441620 B1 | 10 January 1996 |
| | | CA 2035839 A1 | 09 August 1991 |
| | | CA 2035839 C | 08 August 2000 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310721613
- CN 202310722783
- CN 1091748
- CN 101050245
- CN 101486722
- CN 102796132 B
- CN 102796129 B
- CN 102796128 B
- CN 1151183 C
- CN 1267508 C
- CN 1463990 A
- US 6020279 A